# EUROPEAN PATENT APPLICATION

(11) **EP 3 733 561 A1**
(43) Date of publication of application: **04.11.2020**
(21) Application number: 18897722.7
(22) Date of filing: 27.12.2018
(51) Int. Cl.: B65G 11/00, B65G 47/00

(54) **MATRIX-TYPE TRACK SYSTEM, ASSOCIATED LOOP-TYPE PRODUCTION LINE AND PRODUCTION METHOD THEREFOR**

(30) Priority: 27.12.2017 CN 201711453235
(71) Applicant: Dofsim Technologies Co., Ltd., Beijing 102600 (CN)
(72) Inventor: ZHANG, Defeng, Beijing 102600 (CN); ZHANG, Zuochun, Beijing 102600 (CN); LI, Yongqiang, Beijing 102600 (CN); LI, Baokui, Beijing 102600 (CN)
(74) Representative: Vitina, Maruta
(86) International application number: PCT/CN2018/124435
(87) International publication number: WO 2019/129155

(57) **Abstract**

Disclosed are a matrix track system, a production line with associated loops and a produdction method using the production line. The matrix track system includes a plurality of track nodes. The guide rail includes fixed guide rails, straight guide rails and turning guide rails. Each of the track nodes is mounted with a turnout device. Adjacent track nodes in a row are connected via at least two fixed guide rails which are parallel, and adjacent track nodes in a column are connected via at least two fixed guide rails which are parallel. The turnout device includes a straight guide rail, a turning guide rail and a switch mechanism for switching of the straight guide rail and the turning guide rail; and the fixed guide rails, the straight guide rails and the turning guide rails are connected end to end to form a loop. The production line of the present disclosure is based on the matrix track system, which has good generality and flexibility, so that the configuration of the production line can be changed at any time according to the requirements, and thus the production line is not affected by failures. Besides, the processing or assembly of the workpiece is finished after passing the production line, and multiple operations are carried out at the same time, so a high work efficiency is achieved using the production line with associated loops.

## Description

### CROSS-REFERENCE TO RELATED APPLICATION

This application claims the benefit of priority from Chinese Patent Application No. 201711453235.6, titled "A matrix track system, a production line with associated loops and a production method using the production line", filed on December 27, 2017. The content of the aforementioned applications, including any intervening amendments thereto, is incorporated herein by reference.

### TECHNICAL FIELD

This application relates to production lines, and more particularly to a matrix track system, a production line with associated loops and a production method using the production line.

### BACKGROUND OF THE DISCLOSURE

Generally, processing or assembly devices are succussively fixed at two sides of straight conveying lines to form production lines, in which workpieces to be processed or assembled travel on the conveying lines. For example, when the workpiece to be processed or assembled arrives at the location of processing or assembly devices, the conveying line stops, and the processing device processes the workpiece to be processed or assembled on the conveying line. Then, the workpiece continues to travel on the conveying line after the specific processing or assembly is finished, and the processing or assembly device is reaady for the next workpiece to be processed or assembled.

However, in practical use, the existing production line has the following defects.

When there is a need to adjust the processing or assembly process, or change the products to be produced or assembled in the production line, actions of robots in the production line are required to be accordingly adjusted, and even the entire production line should be redesigned. Thus, the existing production line has poor generality and flexibility. As a result, the existing production line is only capable of processing or assembling specific workpieces, and cannot be adjusted as the processing or assembly process changes. Further, it is impossible to process or assemble different products in the same production line. In addition, if a device of the production line or a section of the conveying line fails to work during the operation of the production line, the entire production line should be stopped to allow the faulty device or section to be repaired or restored. This is time-consuming and laborious, thus greatly affecting the production effciency.

### SUMMARY OF THE DISCLOSURE

The present disclosure aims to provide a matrix track system, a production line with associated loops based on the matrix system and a production method using the production line. The production line with associated loops is based on the matrix track system, which has good generality and flexibility, so that the configuration of the production line with associated loops can be changed at any time according to the requirements, and thus the production line is not affected by failures. Besides, the processing or assembly of the workpiece is finished after passing the production line, and multiple operations are carried out at the same time, so a high work efficiency is achieved using the production line.

To achieve the above purposes, the present disclosure provides a matrix track system, comprising a plurality of track nodes which are arranged in a matrix structure and a guide rail;
wherein the guide rail comprises a plurality of fixed guide rails, a plurality of straight guide rails and a plurality of turning guide rails; each of the track nodes is mounted with a turnout device; adjacent track nodes in a row are connected via at least two fixed guide rails which are parallel, and adjacent track nodes in a column are connected via at least two fixed guide rails which are parallel; the turnout device comprises a straight guide rail, a turning guide rail and a switch mechanism for switching of the straight guide rail and the turning guide rail; and the fixed guide rails, the straight guide rails and the turning guide rails are connected end to end to form a loop.

At least one travel device is mounted on and circulates on the guide rail of the loop; the travel device is configured to carry a workpiece, a tool, a function execution device or a degree of freedom (DOF) motion device on which the function execution device is placed; and when a plurality of travel devices are arranged on the loop, the travel devices circulate on the loop in queue.

The function execution device moves with the travel device or is fixed beside the guide rail of the loop.

When the travel device on the guide rail turns, through the switch mechanism, the turning guide rail of the turnout device is connected with two fixed guide rails which are perpendicular to each other and are adjacent to the turning guide rail.

When the travel device on the guide rail travels straightly, through the switch mechanism, the straight guide rail of the turnout device is connected with two fixed guide rails which are in a straight line and are adjacent to the turning guide rail.

The present disclosure further provides a production line with associated loops, comprising the matrix track system, wherein the matrix track system comprises at least two loops; one of the loops is associated with another, and two loops which are associated have an associated path; each loop is provided with a loading station and/or an unloading station; the travel devices on the two loops travel on the associated path of the two loops in the same direction at the same speed; the travel devices on the two loops travel side by side or have a distance along a length of the two loops, so that an operation is carried out for operation objects on the travel devices which travel on the associated path and respectively belong to the associated two loops.

The two loops with the associated path are in a nested form or a parallel form.

The present disclosure further provides a production method using the production line, comprising:
1) placing operation objects through respective loading stations on the travel devices traveling on the loops;
2) carrying out an operation for the operation objects carried by travel devices traveling on a Q-level loop and a (Q-1)-level loop which are associated to obtain a (Q-1)-level semi-finished product; or directly loading through the loading station a (Q-I)-level semi-finished product to a travel device traveling on the Q-level loop as an operation object;
3) adding 1 to Q, and repeating the step 2 until Q increases to (N+1); and
4) outputting an (N-1)-level semi-finished product in an N-level loop as a finished product;
wherein Q is an integer starting from 2; N is a positive integer greater than 1; the loops comprise 1 to N level loops; and the operation object is a workpiece, a tool, a function execution device or a DOF motion device.

The present invention has the following advantages.

The production line of the present invention is based on the matrix track system, and multiple production lines with associated loops can be designed with the matrix track system. The production lines with associated loops can be operated simultaneously to process and assemble the desired products. Therefore, the matrix track system of the present invention has good generality and flexibility, and various processing or assembly production line schemes suitable for the workpiece can be designed according to the processing or assembly requirements of workpieces, which greatly improves the production efficiency.

The production line of the present invention is capable of carrying out multiple operations at the same time, for example, one workpiece is mounted on the part while another workpiece is tested. The production line with associated loops replaces fixed operation mode of the traditional production line, in which multiple operation are simultaneously carried out, which greatly improves the production efficiency, thus greatly shortening the production cycle.

When one or several track nodes or one or several sections on the loop in the matrix track system fail, the matrix track system of the present invention can redesign the production line with associated loops according to processing or assembly requirements of workpieces. In addition, the workpiece is processed or assembled without stops of the production line, so the production line is not affected by failures, which greatly improves the production efficiency.

Workpieces to be processed or assembled, function execution devices, tools and DOF motion devices, etc. are automatically conveyed to the production line, which eliminates the manual operation. Further, the physical structures of the production line can b e controlled by software, and the manual operation is eliminated.

Associated loops of the production line are associated in various forms, such as the nested form and the parallel form. The workpiece can be processed or assembled level by level, including the combination of the tool and the workpiece, the combination of the tool and the function execution device, the combination of the function execution device and the DOF motion device and the processing or assembly of the workpiece with the function execution device. The function execution device and the DOF motion device involved in the processing or assembly process replace robots required for temporary assembly.

The production line of the present invention is applicable to various types of production lines such as assembly production lines, processing production lines.

### BRIEF DESCRIPTION OF THE DRAWINGS

The present invention will be described in detail with reference to the accompanying drawings and the embodiments, from which features and advantages of the present invention will be obvious.
Fig. 1 is a schematic diagram of a matrix track system according to an embodiment of the present disclosure.
Fig. 2 schematically shows a loop of the matrix track system according to an embodiment of the present disclosure.
Fig. 3 schematically shows a guide rail of the matrix track system according to an embodiment of the present disclosure.
Fig. 4 schematically shows the guide rail and a function execution device of the matrix track system according to an embodiment of the present disclosure.
Fig. 5 schematically shows the guide rail and the function execution device of the matrix track system according to another embodiment of the present disclosure.
Fig. 6 schematically shows a production line with associated loops according to an embodiment of the present disclosure.
Fig. 7 schematically shows a production line with associated loops according to another embodiment of the present disclosure.

### DETAILED DESCRIPTION OF EMBODIMENTS

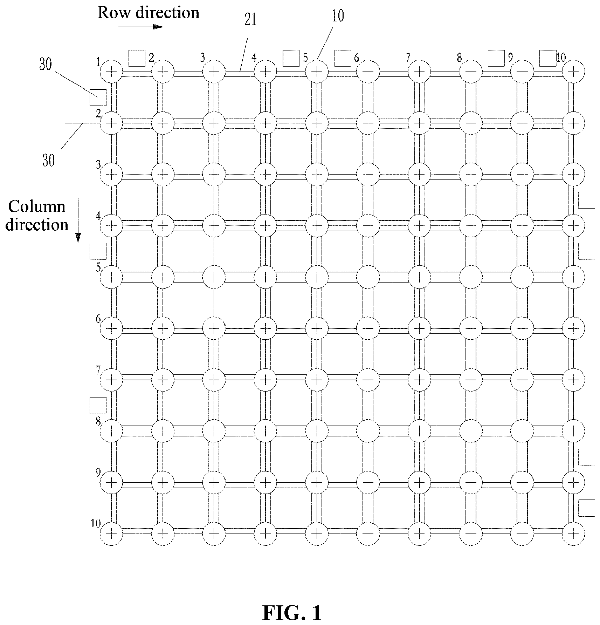

Referring to Figs. 1-5, the present disclosure provides a matrix track system, including a plurality of track nodes 10 which are arranged in a matrix structure and a guide rail 20. That is, the track nodes 10 are arranged in rows and columns, and the track system is in a rectangular shape. The guide rail includes fixed guide rails 21, straight guide rails 22 and turning guide rails 23. Turnout devices are mounted on the track nodes 10. Adjacent track nodes 10 in a row are connected through the fixed guide rails 21 which are parallel to each other, and adjacent track nodes 10 in a column are connected through the fixed guide rails 21 which are parallel to each other. The turnout devices include the straight guide rails 22, the turning guide rails 23 and a plurality of switch mechanisms for the swiching between the straight guide rails 22 and the turning guide rails 23. The turnout devices are mounted on intersections of rows and columns, and the fixed guide rails 21 share the same mounting surface with the straight guide rails 22 and the turning guide rails 23 on the turnout devices. The fixed guide rails 21, the straight guide rails 22 and the turning guide rails 23 are connected end to end to form a loop 70. That is, the fixed guide rails 21 between adjacent track nodes 10 are connected with the straight guide rails 22 or the turning guide rails 23 through the turnout devices on the track nodes 10 to form a loop 70. The switch mechanisms on the turnout devices are configured for the switching between the straight guide rails 22 and the turning guide rails 23.

In some embodiment, the track nodes 10 located at four corners of the track system are provided with the turnout devices, and are connected to an external production line. In some embodiments, the turnout devices located at the four corners are omitted.

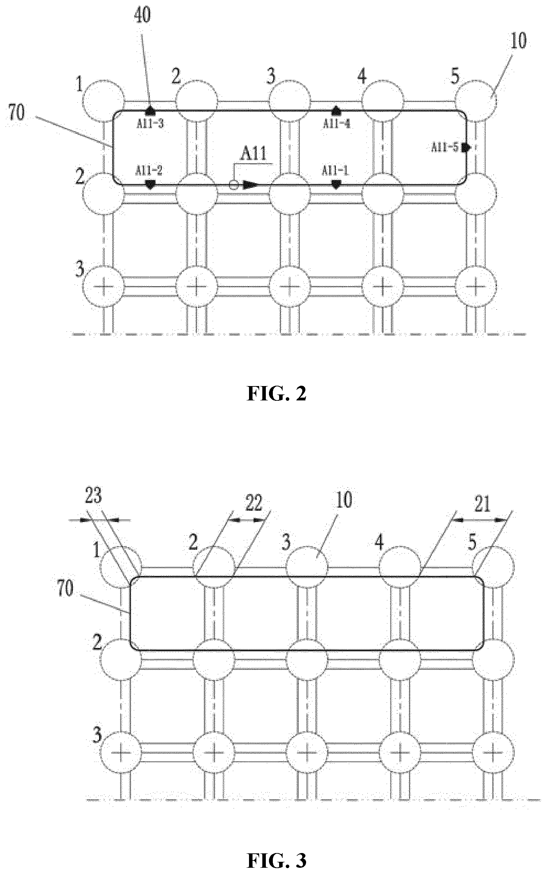

Referring to Figs. 2, 4 and 5, at least one travel device 40 is mounted on and circulates on the guide rail 20 of the loop 70. The travel device 40 is configured to carry a workpiece to be processed or assembled, a tool, a function execution device 50 or a DOF motion device 60 on which the function execution device 50 is placed. In the practical application, any object applicable for the production technique may be placed on the travel device 40, which is not limited herein. When there are a plurality of travel devices 40 on the loop 70, the travel devices circulate on the loop 70 in a queue.

In practical applications, the function execution device 50 travels with the travel device 40 or is fixed beside the guide rail 20 of the loop 70.

In practical applications, when the travel device 40 travels on the guide rail 20 and arrives at a track node 10 where a turn is needed, through the switch mechanism the turning guide rail 23 is connected with two fixed guide rails 21 which are penpendicular to each other and are adjacent to the turning guide rail 23. When the travel device 40 travels on the guide rail 20 and arrives at a track node 10 where a straight movement is needed, through the switch device, the straight guide rail 22 is connected with two fixed guide rails 21 which are in a straight line and are adjacent to the turning guide rail 23.

In the practical application, when the turnout device switches the guide rail, the travel devices 40 are not located on the turnout devices.

In the practical application, operators ensure that the straight guide rails or the turning guide rails on the turnout devices are in place according to the requirement of the loop, so that the straight guide rails or the turning guide rails which are connected are not required to be adjusted after the loop is arranged. However, the loop 70 should be rearranged through the turnout devices when a track node 10 or a section of a loop fails, or a product or an assembling process needs to be changed, or at least one travel device is required to be removed from the loop. At this time, the switching between the straight guide rails 22 and the turning guide rails 23 is realized through the switch mechanisms to adjust the loop.

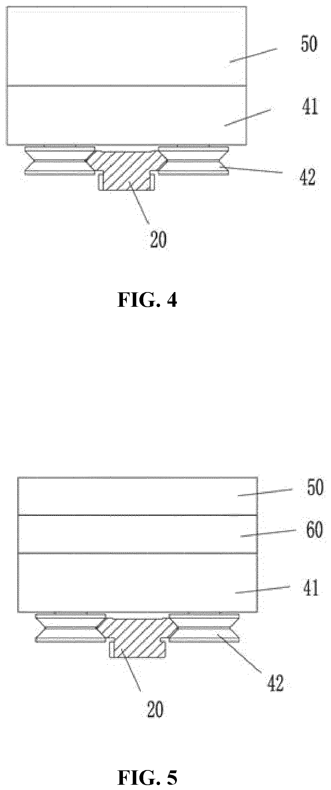

Referring to Figs. 4-5, the travel device 40 includes a conveying platform 41. A bottom of the conveying platform 41 is provided with a guide mechanism 42 that holds the conveying platform 41 on the guide rail 20 and a drive mechanism that drives the conveying platform 41 to move on the guide rail 20.

Referring to Fig. 4, the guide rail is provided with teeth at both sides. The guide mechanism 42 of the travel device 40 mounted on the guide rail 20 is a guide roller, and the guide rollers are fitted to both sides of the guide rail 20 to play a guiding role. The teeth are provided at two sides of the guide rail 20 and are engaged with gears on both sides of the drive mechanism of the travel device 40, so that the conveying platform 41 stably runs on the guide rail 20. The conveying platform 41 shown in Fig. 4 only carries the function execution device 50.

Referring to Fig. 5, the guide rail is provided with teeth at one side. The guide mechanism 42 of the travel device 40 mounted on the guide rail 20 is a guide roller, and the guide rollers are fitted to both sides of the guide rail 20 to play a guiding role. The teeth are provided at one side of the guide rail 20 and are engaged with a gear on one side of the drive mechanism of the travel device 40, so that the conveying platform 41 stably runs on the guide rail 20. The DOF motion device 60 shown in Fig. 5 is placed on the conveying platform 41, and the function execution device 50 is placed on the DOF motion device 60.

The difference between the guide rail 20 in Fig. 4 and the guide rail 20 in Fig. 5 is that the guide rail is provided with teeth at one side or two sides. When the guide rail adopts teeth at both sides, the travel device 40 is capable of turning towards more directions, thus rendering more planning programs of the loop 70.

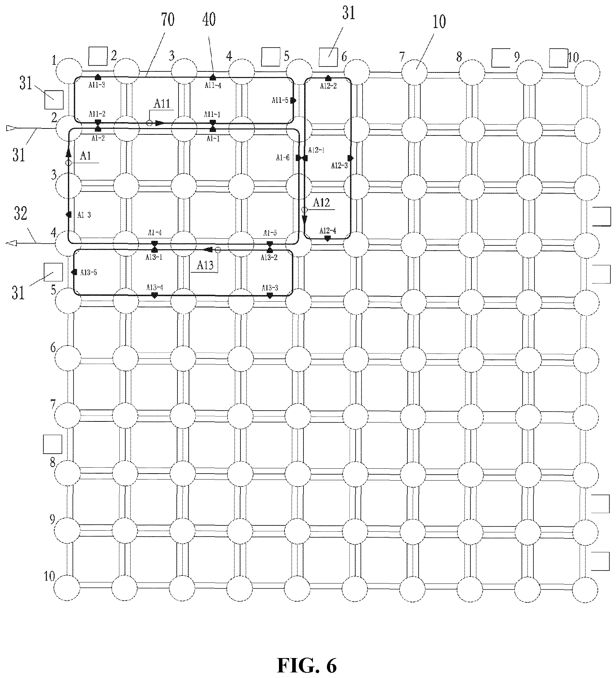

Referring to Fig. 6, a loading station 31 and/or a unloading station 32 is provided beside the guide rail 20 of the loop 70. The loading station 31 and the unloading station 32 are fixed stations or external production lines. The loading station 31 and the unloading station 32 are separate stations or an integrated station (i.e., a loading and unloading station 30). In some embodiments, the loading station and the unloading station are respectively provided with a loading robot and an unloading robot to grab materials.

In the present disclosure, the travel device 40 may be a smart car with power which is self-driven. The travel device 40 is controlled to move on the guide rail 20 through electricity, magnetic forces, etc., which is not limited herein. The workpieces may be parts or components. The tool may be a processing tool, an assembly tool, an inspection tool, a measuring tool, or a polishing tool. The function execution device 50 may be a processing device, an assembly device, an inspection device, a measuring device, a polishing device, or the like. The DOF motion device 60 may be a drive device capable of moving in multiple directions, such as a common 6-DOF manipulator, a Delta parallel manipulator, or a Scara robot. Obviously, the travel device 40, the workpiece, the tool, and the function execution device 50 may be in other forms, which are not limited herein.

Referring to Fig. 1, provided is a track system with 100 track nodes 10 with 10 rows and 10 columns. The number on the top row of the track system represents the column number, and the number on the left represents the row number. The track node 10 is represented by Pi, j, where i represents the row where the track node 10 is located, and j represents the column where the track node 10 is located. For example, P2,3 represents the track node 10 in the second row and the third column.

The fixed guide rails, the straight guide rails and the turning guide rails in the loop are shown in Fig. 3.

The travel devices 40 provided on the loop 70 and the traveling direction (shown by arrows) of the travel devices 40 are shown in Fig. 2. Each travel device 40 is marked with a corresponding reference number, such as A11-1 to A11-5 in Fig. 2. The loop 70 is indicated by a thick solid line, and is marked with a corresponding reference number, for example, A11 marked in Fig. 2. At least one travel device 40 circulates on the loop 70. In Fig. 2, the loop 70 is a loop formed by track nodes P1,1, P1,2, P1,3, P1,4, P1,5, P2,5, P2,4, P2,3, P2,2 and P2,1.

In the track system shown in Fig. 6, the turnout device on the track node P2,5 provides a straight guide rail 22 for the loop A12 and a turning guide rail 23 for loops A11 and A 1. The types of the guide rails on the turnout devices determine the shape of the loop 70.

Referring to Fig. 6, the present disclosure further provides a production line with associated loops, including the matrix track system. The matrix track system includes at least two loops 70, and one loop 70 is associated with another, and the associated loops have an associated path, where the length of the associated path is designed according to the time required for the operation. Each loop 70 is provided with the loading station 31 and/or unloading station 32. For two loops 70 with an associated path, the travel devices 40 on the two loops 70 travel on the associated path in the same direction at the same speed. That is, there is no relative movement between the travel devices 40 on the two loops 70, and the travel devices 40 on the two loops 70 travel side by side or have a distance along a length of the two loops, so that corresponding operations are carried out for operation objects on the two travel devices 40 which travel on the associated path and belong to the associated loops 70.

In the present disclosure, the situation that two loops 70 have an associated path indicates that the two loops have adjacent edges, at least two fixed guide rails 21 which are parallel are provided between two track nodes 10, so that the travel devices 40 on the two loops 70 simultaneously move on the adjacent edges, respectively.

In addition, when the travel devices 40 on the two loops 70 travel on the associated path at the same time, the two travel devices 40 may not be connected. Preferably, the two travel devices 40 are connected to each other. This can improve the safety of the operation. However, it should be noted that the two travel devices should be detached from each other in time as they are to be separated.

In this disclosure, the two loops 70 having the associated path are associated in a nested form or a parallel form.

The nested associated loops mean that one loop 70 is located inside the other loop 70, and the nested associated loops share an edge. The parallel associated loops mean that one loop 70 is located outside the other loop 70, and the parallel associated loops share an edge.

Referring to Fig. 6, loops A11 and A1 are parallel associated loops, and the section from the track node P2,1 and the track node P2,5 is the associated path, where in the associated path, the travel devices 40 on the loop A11 and the loop A1 travel in the same direction at the same speed. As shown in Fig. 6, the travel device A11-2 on the loop A11 and the travel device A1-2 on the loop A1 move side by side, and the travel device A11-1 on the loop A11 and the travel device A1-1 on the loop A1 move side by side. At this time, for example, the function execution device 50 on the travel device A11-2 performs a functional operation on the workpiece on the travel device A1-2, and the function execution device 50 on the DOF motion device 60 on the travel device A11-1 performs a functional operation on the workpiece on travel device A1-1.

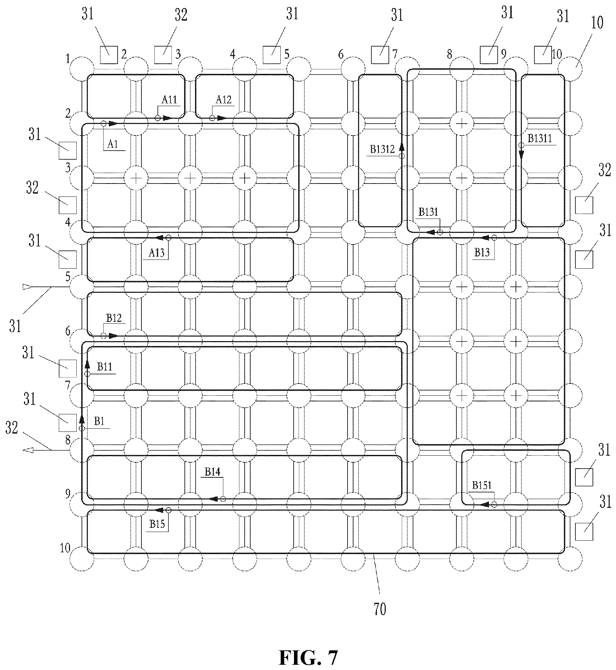

Referring to Fig. 7, loops B11 and B1 are nested associated loops, and the section from the track node P6,1 and the track node P6,7 is the associated path, where in the associated path, the travel devices 40 on the loop A11 and the loop A1 travel in the same direction at the same speed. For example, the function execution devices 50 on the travel device 40 on the two loops perform a certain function operation in the associated path.

A charging guideway is provided in the loop 70, or the loop 70 is connected to an external charging guideway which is provided with charging piles.

In the practical use, in the case that the loop 70 is provided with the charging guideway, the travel device 40, the function execution device 50, the DOF motion device 60, etc. are charged without stops while passing through the charging guideway through wireless charging. In the case that an external charging guideway is provided, the travel device 40 may carry the function execution device 50 and the DOF motion device 60 to the charging guideway, and the travel device stops for the wired or wireless charging through a charging pile.

Based on the production line, the present disclosure further provides a production method, which includes the following steps.
1) Operation objects are placed on the travel devices that circulate on the loops 70 through the loading stations 31, respectively.
2) Operations of an operation object carried by the travel device 40 traveling on a Q-level loop and the operation object carried by the travel device 40 traveling on a (Q-1)-level loop are finished while traveling on the associated path to form a (Q-I)-level semi-finished product; or the operation object carried by the travel device 40 traveling on the Q-level loop is the (Q-1) level semi-finished product directly fed through the loading station 31.
3) Q increases by 1, and the step 2 is repeated until Q increases to N+1.
4) An (N-1)-level semi-finished product in the N-level loop is output as a finished product to complete the production.

Where, Q is a positive integer starting from 2, Q =2, 3, ..., N, and N is a positive integer greater than 1. The loops 70 include 1 to N level loops, and the (Q-1)-level loop belongs to the Q-level loop.

The operation object is a workpiece, a tool, a function execution device 50 or a DOF motion device 60.

Further, the workpiece may be a part or a component, and the tool may be a processing tool, an assembly tool, an inspection tool, a measuring tool, or a polishing tool, etc. The function execution device 50 may be a processing device, an assembly device, an inspection device, a measuring device, a polishing device, or the like. The DOF motion device 60 may be a drive device capable of moving in multiple directions.

Specifically, the operation objects are placed on the travel devices 40 which circularly travel on corresponding loops 70 through the loading stations 31. Operations of the operation objects carried by the travel device 40 traveling on a second-level loop and the operation objects carried by the travel devices 40 traveling on a first-level loop are completed in the associated path to obtain a first-level semi-finished product; or the operation objects carried by the travel devices 40 traveling on the second-level loop are the first-level semi-finished products directly fed through the loading station 31. Operations of the operation objects carried by the travel devices 40 traveling on a third-level loop and the first-level semi-finished products carried by the travel devices 40 traveling on the second-level loop are completed in the associated path to obtain a second-level semi-finished product; or the operation objects carried by the travel devices 40 traveling on the third-level loop are the second-level semi-finished products directly fed through the loading station 31. This process is repeated until the finished products (i.e., the (N-1)-level semi-finished products) are output, and at this time, the production is finished.

The following describes the working process and principle of the present invention by taking the production line shown in FIG. 7 as an example.

FIG. 7 shows a track system with 100 track nodes 10 having 10 rows and 10 clolumns. Product A and product B are simultaneously assembled online in the track system. The product A is assembled from a first part, a second part, a third part and a fourth part, where the first part is the basic part for the assembly. Referring to Fig. 7, Loops A1, A11, A12 and A 13 are designed for the product A, where A1 is a second-level loop, and A11, A12 and A13 are first-level loops. The loops A1 and A11 have an associated path which is from the track node P2,1 to the track node P2,3. The loops A1 and A12 have an associated path which is from the track node P2,3 to the track node P2,5. The loops A1 and A13 have an associated path which is from the track node P4,1 to the track node P4,5.

The product A is assembled as follows.

The first part is placed on the travel device 40 traveling on the loop A1 from the loading station 31 by a loading robot. The second part, the third part and the fourth part are placed on the travel devices 40 traveling on respective loops from respective loading stations 31. The second part is mounted on the first part in the associated path of the loops A1 and A11. The third part is mounted on the first part in the associated path of the loops A1 and A12. The fourth part is mounted on the first part in the associated path of the loops A1 and A13. When the second, third and fourth parts all are mounted on the first part, the assembly of the product A is finished, and the finished product is output through the unloading station 32 of the loop A1.

The product B is assembled from a basic tooling, a first part, a second part, a third part, a fourth part, a first component and a second component. Loops B1, B11, B13, B14, B15, B131, B1311, B1312 and B151 are designed for the product B, where B1 is a fourth-level loop; B11, B12, B13, B14 and B15 are third-level loops; B131 and B151 are second-level loops; and B1311 and B1312 are first-level loops. B1311 and B131 have an associated path which is from the track node PI,9 to the track node P4,9; B1312 and B131 have an associated path which is from the track node PI,7 to the track node P4,7; B131 and B13 have an associated path which is from the track node P4,7 to the track node P4,9; B151 and B15 have an associated path which is from the track node P9,8 to the track node P9,10; B11 and B1 have an associated path which is from the track node P6,1 to the track node P6,7; B12 and B1 have an associated path which is from the track node P6,1 to the track node P6,7; B13 and B1 have an associated path which is from the track node P6,7 to the track node P8,7; B14 and B1 have an associated path which is from the track node P9,1 to the track node P9,7; and B15 and B1 have an associated path which is from the track node P9,1 to the track node P9,7. The product B is assembled step by step through these loops.

The product B is assembled as follows.

The tool is placed on the travel device 40 traveling on the loop B1311 from the loading station 31 of the loop B1311, and in the associated path of B1311 and B131, the tool is transmitted to the travel device 40 traveling on B131.

The first part is placed on the travel device 40 traveling on the loop 1312 through the loading station 31 of the loop B1312, and in the associated path of B1312 and B131, the first part is clamped by the tool.

The third part is placed on the travel device 40 traveling on the loop B13 through the loading station 31 of the loop B13, and in the associated path of B131 and B13, the first component is mounted on the third part to obtain a first semi-finished product.

The second component is placed on the travel device 40 traveling on the loop B151 through the loading station 31 of the loop B151, and the fourth part is placed on the travel device 40 traveling on the loop B15 through the loading station 31 of the loop B15. In the associated path of B151 and B15, the second component is mounted on the fourth part to obtain a second semi-finished product.

The first part is placed on the travel device 40 traveling on the loop B11 from the loading station 31 of the loop B11; the second part is placed on the travel device 40 traveling on the loop B12 from the loading station 31 of the loop B12. The basic tooling is placed on the travel device 40 traveling on the loop B1 from the loading station 31 of the loop B1. The test device is located on the travel device 40 of the loop B14 and circulates along B14.

In the associated path of B11 and B1, the first part is mounted on the basic tooling; in the associated path of B12 and B1, the second part is mounted on the basic tooling; in the associated path of B13 and B1, the first semi-finished product is mounted on the basic tooling; and in the associated path of B15 and B1, the second semi-finished product is mounted on the basic tooling to finish the assembly of the product B.

Finally, in the associated path of the loop B14 and the loop B1 (from the track node P9,1 to the track node P9,7), the test device tests the assembled product B (including the basic tooling, the first part, the second part, the first semi-finished product and the second semi-finished product) traveling on the loop B1. Then, the tested product is output from the unloading station 32 of the loop B1.

In practical use, when if a road section fails and the associated loop needs to be adjusted, the configuration of the loop and the position of associated path are adjusted through the switch mechanism of the turnout device. Therefore, the same product may be assembled through different configurations of the associated loop type production line, which is flexible in design. The production line greatly improves the production efficiency and allows the track system to have good flexibility.

The present invention has the following advantages.

The production line is based on the matrix track system, which has good generality and flexibility, so that the configuration of the production line can be changed at any time according to the requirements, and thus the production line is not affected by failures. Besides, the processing or assembly of the workpiece is finished after passing the production line, and multiple operations are carried out at the same time, so a high work efficiency is achieved using the production line with associated loops.

The above are the preferred embodiments of the present disclosure. Any equivalent change and modification made by those skilled in the art without departing from the spirit and scope of the present disclosure shall fall within the scope of the present disclosure.

## Claims

1. A matrix track system, comprising a plurality of track nodes which are arranged in a matrix structure and a guide rail; **characterized in that** the guide rail comprises a plurality of fixed guide rails, a plurality of straight guide rails and a plurality of turning guide rails; each of the track nodes is mounted with a turnout device; adjacent track nodes in a row are connected via at least two fixed guide rails which are parallel, and adjacent track nodes in a column are connected via at least two fixed guide rails which are parallel; the turnout device comprises a straight guide rail, a turning guide rail and a switch mechanism for switching of the straight guide rail and the turning guide rail; and the fixed guide rails, the straight guide rails and the turning guide rails are connected end to end to form a loop.

2. The matrix track system according to claim 1, **characterized in that**
the turnout device is mounted at four corners of the matrix track system, respectively, and the track nodes at the four corners of the matrix track system are connected to an external production line; or no turnout device is mounted at the four corners of the matrix track system.

3. The matrix track system according to claim 1, **characterized in that**
at least one travel device is mounted on and circulates on the guide rail of the loop; the travel device is configured to carry a workpiece, a tool, a function execution device, or a DOF motion device on which the function execution device is placed; and
when a plurality of travel devices are arranged on the loop, the travel devices circulate on the loop in queue.

4. The matrix track system according to claim 3, **characterized in that**
when the travel device on the guide rail turns, through the switch mechanism, the turning guide rail of the turnout device is connected with two fixed guide rails which are perpendicular to each other and are adjacent to the turning guide rail; and
when the travel device on the guide rail travels straightly, through the switch mechanism, the straight guide rail of the turnout device is connected with two fixed guide rails which are in a straight line and are adjacent to the turning guide rail.

5. The matrix track system according to claim 3, **characterized in that**
each travel device comprises a conveying platform; a bottom of the conveying platform is provided with a guide mechanism that hold the conveying platform on the guide rail and a drive mechanism that drives the conveying platform to move on the guide rail.

6. The matrix track system according to claim 1, **characterized in that**
a loading station and/or an unloading station is provided beside the guide rail of the loop; the loading station and the unloading station are fixed stations or external production lines; and the loading station and the unloading station are separate or integrated.

7. A production line with associated loops, comprising the matrix track system of any one of claims 1-6, **characterized in that** the matrix track system comprises at least two loops; one of the loops is associated with another, and two loops which are associated have an associated path; each loop is provided with a loading station and/or a unloading station; the travel devices on the two loops travel on the associated path of the two loops in the same direction at the same speed; the travel devices on the two loops travel side by side or have a distance along a length of the two loops, so that an operation is carried out for operation objects on the travel devices which travel on the associated path and respectively belong to the associated two loops.

8. The production line according to claim 7, **characterized in that**
the two loops with the associated path are in a nested form or a parallel form.

9. The production line according to claim 7, **characterized in that**
the at least two loops are provided with a charging guideway; or each loop is connected with an external charging guideway mounted with a charging pile.

10. A production method using the production line of any one of claims 7-9, comprising:
1) placing operation objects through respective loading stations on the travel devices traveling on the loops;
2) carrying out an operation for the operation objects carried by travel devices traveling on a Q-level loop and a (Q-I)-level loop which are associated to obtain a (Q-I)-level semi-finished product; or directly loading a (Q-I)-level semi-finished product through the loading station to a travel device traveling on the Q-level loop as an operation obj ect;
3) adding 1 to Q, and repeating the step 2 until Q increases to (N+1); and
4) outputting an (N-1)-level semi-finished product in an N-level loop as a finished product;
wherein Q is a positive integer starting from 2; N is a positive integer greater than 1; the loops comprise 1 to N level loops; and the operation object is a workpiece, a tool, a function execution device or a DOF motion device.
